# EUROPÄISCHE PATENTSCHRIFT

(11) **EP 3 798 560 B1**
(45) Veröffentlichungstag und Bekanntmachung des Hinweises auf die Patenterteilung: **22.11.2023**
(21) Anmeldenummer: 20150773.8
(22) Anmeldetag: 08.01.2020
(51) Int. Cl.: F26B 9/08, F26B 25/00, F26B 21/04, B29B 13/06

(54) **VORRICHTUNG UND VERFAHREN ZUM BEHANDELN VON KUNSTSTOFFEN**
METHOD AND DEVICE FOR TREATING SYNTHETIC SUBSTANCES
DISPOSITIF ET PROCÉDÉ DE TRAITEMENT DE MATIÈRES PLASTIQUES

(30) Priorität: 30.09.2019 CN 201921668292 U
(43) Veröffentlichungstag der Anmeldung: 31.03.2021
(73) Patentinhaber: SIMAR GmbH, 71665 Vaihingen/Enz (DE)
(72) Erfinder: WEINERT, Harald, 75443 Ötisheim (DE)
(74) Vertreter: Fleck, Julia Maria

(56) Entgegenhaltungen:
- WO-A1-2010/089721
- CN-Y- 201 203 332
- DE-A1-102014 103 772
- DE-U1- 29 621 313
- JP-A- 2002 285 178
- TW-A- 201 317 530
- US-A- 4 030 205
- US-A- 4 601 114
- US-A- 5 546 673
- US-A- 5 566 468
- US-A- 5 896 675
- US-A1- 2015 176 896
- US-A1- 2019 105 806

## Beschreibung

Die Erfindung betrifft eine Vorrichtung zum Behandeln, insbesondere Trocknen, von Kunststoffen, mit einem Trockengutbehälter zur Aufnahme von zu behandelndem Feststoff, insbesondere Kunststoff, einem Luftkreislauf zur Kreisführung von Prozessluft, wobei der Trockengutbehälter in dem Luftkreislauf von Prozessluft durchströmbar angeordnet ist, einer in dem Luftkreislauf angeordneten Trockenlufterzeugungseinheit zur Trocknung von aus dem Trockengutbehälter strömender Prozessluft, und einer Steuereinrichtung zur Steuerung und/oder Regelung des Trocknungsvorgangs. Ferner betrifft die Erfindung ein Verfahren zum Behandeln, insbesondere Trocknen, von Kunststoffen.

Eine Vorrichtung und ein Verfahren zum Behandeln von Kunststoffen mit einem Trockengutbehälter zur Aufnahme von zu behandelndem Kunststoff dieser Art sind in der US 2019 /105806 A1 angegeben. Dabei ist eine Abscheidung von Schadstoffen in Form flüchtiger Gase durch Kondensation vorgesehen. Eine Reinigungsstufe stromauf einer Trockenlufterzeugungseinheit besteht aus einer Filtereinrichtung und einem Kondensatabscheider.

Eine Vorrichtung und ein Verfahren zum Behandeln von Kunststoffen sind auch in der US 4 030 205 A sowie ferner in der US 5 546 673 A, der US 4 601 114 A, der US 5 566 468 A und auch in der US 2015 / 176896 A1 gezeigt.

Eine weitere Vorrichtung dieser Art ist in der DE 10 2014 103 772 A1 angegeben.

Bei der Herstellung von Kunststoffgranulaten zur Weiterverarbeitung reichern sich in der Regel innerhalb des Kunststoffmaterials Schadstoffe, insbesondere flüchtige Kohlenwasserstoffe ("volatile organic compounds"), an, die sich beispielsweise in Resten von Lösungsmitteln und/oder Kunststoffbausteinen (Polymeren) befinden. Ebenso sind sie beispielsweise in Hilfsmitteln wie Weichmachern, Stabilisatoren, Katalysatoren, Flammenschutz- oder Antioxidationsmitteln enthalten.

Der Siedepunkt der VOC liegt im Bereich von etwa 50 °C bis 260 °C. Aufgrund ihres hohen Dampfdrucks und niedrigen Siedepunkts neigen VOC schnell zum Verdunsten (Verflüchtigen). Dies kann, je nach Konzentration, zu Umweltbelastung und gegebenenfalls zu gesundheitlicher Beeinträchtigung führen.

Zur Vermeidung der Verdunstung werden innerhalb des Herstellungsverfahrens häufig Additive und/oder Schleppmittel eingesetzt, die VOC adsorbieren oder austreiben sollen. Beim Einsatz von Adsorbern als Additive sind die VOC zwar gebunden, bleiben jedoch in dem Kunststoff enthalten, wobei eine Freisetzung unter bestimmten Bedingungen nicht auszuschließen ist. Die Einspeisung von Schleppmitteln in die Schmelze zur Entgasung der VOC während der Extraktion führt zu einem erhöhten technischen Aufwand, verbunden mit einer zusätzlichen Investition in die Maschinentechnik.

Der Erfindung liegt die Aufgabe zugrunde, eine Vorrichtung und ein Verfahren bereitzustellen, mittels welcher bzw. bei dem Schadstoffe, insbesondere VOC, effektiv und unter geringem Aufwand aus den Kunststoffen entfernbar sind bzw. entfernt werden. Die Aufgabe wird für die Vorrichtung mit den Merkmalen des Anspruchs 1 und für das Verfahren mit den Merkmalen des Anspruchs 8 gelöst. Bei der Vorrichtung ist vorgesehen, dass in dem Luftkreislauf zumindest eine Reinigungsstufe zur Entfernung von Schadstoffen, insbesondere von flüchtigen Kohlenwasserstoffen, aus der Prozessluft angeordnet ist. Neben der Trocknung kann somit eine Schadstoffreinigung des Feststoffes mittels der im Kreislauf geführten Luft bewirkt werden. Durch diese Ausbildung kann vorteilhaft Prozessluft, die in der Regel ohnehin innerhalb des Kunststoff-Herstellungsprozesses zum Trocknen verwendet wird, zugleich als Trägerfluid zum Abtransport von Schadstoffen aus dem Feststoff- bzw. Kunststoffgranulat genutzt werden.

Für eine effektive und schnelle Schadstoffentfernung aus dem Kunststoff ist innerhalb des Druckbehälters eine Mischeinrichtung angeordnet. Die Mischeinrichtung kann beispielsweise durch eine Mischschnecke gebildet sein, die für eine gleichmäßige Mischwirkung z. B. symmetrisch innerhalb des Trockengutbehälters, insbesondere entlang einer eine Symmetrieachse bildenden Längsachse des Trockengutbehälters, angeordnet sein kann. Wenn die Mischeinrichtung mit einer vertikalen Richtungskomponente ausgerichtet ist, kann der Feststoff in Granulatform vorteilhaft unter Einwirkung der Schwerkraft während des Behandlungs- bzw. Trocknungsverfahrens vermischt werden. Durch die Mischeinrichtung ist eine gute Luft- und/oder Flüssigkeitsverteilung innerhalb des Feststoffes erreichbar, was einer gleichmäßigen Atmosphäre zur Verflüchtigung der Schadstoffe aus dem Kunststoff zuträglich ist.

Zu einer Verbesserung des Schadstoffaustrags aus dem Feststoff trägt bei, dass eine Unterdruckerzeugungseinrichtung zur Erzeugung eines Unterdrucks gegenüber der Umgebung mit dem Trockengutbehälter in Wirkverbindung steht und der Trockengutbehälter und/oder der Luftkreislauf zur Aufrechterhaltung des Unterdrucks während des Trocknungsvorgangs ausgebildet ist/sind.

Weiterhin wird der Schadstoffaustrag aus dem Feststoff dadurch verbessert, dass dem Trockengutbehälter eine Befeuchtungseinrichtung mit einer Fluidzugabe zur Zugabe eines Fluids, insbesondere Wasser, zu innerhalb des Trockengutbehälters befindlichem Feststoff zugeordnet ist. Dies ermöglicht vorteilhaft eine Wiederbefeuchtung, falls in einem ersten Trocknungsschritt des Feststoffes (innerhalb eines zweiten Verfahrensschrittes) ein erwünschter Schadstoffgrenzwert nicht erreicht wird.

Vorzugsweise ist vorgesehen, dass die Reinigungsstufe stromauf der Trockenlufterzeugungseinheit angeordnet ist und/oder zumindest einen Kondensatabscheider und/oder eine Filtereinrichtung (beispielsweise in Ausbildung als Aktivkohle- und/oder Flüssigkeitsfilter) umfasst. Durch derartige Einrichtungen kann eine effektive Abreinigung der Schadstoffe aus dem Feststoff-Granulat unter vergleichsweise geringem Aufwand erfolgen. Durch die Anordnung stromauf der Trockenlufterzeugungseinheit kann verhindert werden, dass sich in einem Trocknungsmaterial zur Lufttrocknung, beispielsweise in Festbettadsorbern, Schadstoffe ansammeln.

Eine kontrollierte Steuerung bzw. Regelung des Verfahrens zur Erreichung bestimmter Ziel-Grenzwerte, insbesondere Ziel-Schadstoffgrenzwerte, wird ermöglicht, wenn innerhalb des Luftkreislaufs zumindest eine Sensoreinrichtung zur Messung des Schadstoffgehalts, insbesondere des Gehalts an flüchtigen Kohlenwasserstoffen, und/oder zur Temperaturmessung und/oder Feuchtigkeitsmessung in der im Luftkreislauf geführten Luft angeordnet ist.

Eine effizient arbeitende Vorrichtung mit kontrollierbaren Trockenlufteigenschaften ist erhältlich, wenn die Trockenlufterzeugungseinheit zumindest zwei in Kammern befindliche Festbettadsorber aufweist, die im Betrieb während einer Regenerationsphase gleichzeitig von Prozessluft durchströmt sind und im Wechsel zueinander zum einen von trockener Regenerationsluft beaufschlagt sind, wobei die Regenerationsphase eine anfängliche Warmluftregenerationsphase und eine anschließende Kühlphase umfasst.

In diesem Zusammenhang ist vorteilhaft, wenn in dem Luftkreislauf eine Ventilvorrichtung mit einer Zusatz-Ventileinheit angeordnet ist, mittels welcher in der Regenerationsphase beim Übergang von der Warmluftregenerationsphase auf die Kühlphase von einer Frischluftzufuhr, durch die dem Luftkreislauf von außen Luft zuführbar ist, umschaltbar ist auf eine Umluftführung in geschlossenem Luftkreislauf, bei der die aus der betreffenden Kammer austretende Kühlluft innerhalb des Luftkreislaufs wieder zuführbar ist.

Vorzugsweise umfasst der Luftkreislauf eine Zusatz-Strömungsleitung, mittels derer während der Umluftführung die aus der betreffenden Kammer austretende Kühlluft innerhalb des Luftkreislaufs zwischen dem Trockengutbehälter und den Festbettadsorbern, insbesondere stromauf der Reinigungsstufe, wieder zuführbar ist.

Eine hohe Verfahrensflexibilität wird ermöglicht, wenn der Luftkreislauf eine Bypassleitung zum Umgehen des Trockengutbehälters aufweist. So kann die von der Trockenlufterzeugungseinheit kommende Prozessluft über die Trockenluftleitung entweder, bei einem geschlossenen Bypass-Schließmittel innerhalb der Bypassleitung (d. h. geschlossener Bypassleitung), dem Trockengutbehälter zugeführt werden, oder, bei einem geöffneten Bypass-Schließmittel (d. h. geöffneter Bypassleitung), innerhalb der Bypassleitung, über die Bypassleitung wieder der Rückluftleitung zugeführt werden. Bei geöffneter Bypassleitung sind vorhandene Schließmittel stromab des Trockengutbehälters in der Rückluftleitung und stromauf des Trockengutbehälters in der Trockenluftleitung zur strömungsmechanischen Entkopplung des Trockengutbehälters von dem Luftkreislauf geschlossen. So kann die Prozessluft ohne Durchströmung des Trockengutbehälters im Kreislauf geführt werden. Dies kann z. B. während eines Stand-by-Betriebs vorteilhaft sein, währenddessen z. B. die Entleerung des Trockengutbehälters eingeleitet wird.

Bei dem Verfahren ist erfindungsgemäß vorgesehen, dass aus dem Feststoff Schadstoffe, insbesondere flüchtige Kohlenwasserstoffe, mittels der Prozessluft abtransportiert werden und die Schadstoffe aus der Prozessluft in dem Luftkreislauf in zumindest einer Reinigungsstufe entfernt werden.

Das Verfahren umfasst einen ersten Schritt mit Befüllen des Trockengutbehälters mit Feststoff, einen zweiten Schritt mit Trocknen des Feststoffes in einer anfänglichen Trocknungsphase mittels Prozessluft bei Umgebungsdruck und anschließendem Erzeugen einer Unterdruckatmosphäre in einer Unterdruckphase, wobei der Druck innerhalb des Trockengutbehälters gegenüber dem Umgebungsdruck abgesenkt wird, und einen dritten Schritt mit Entleerung des Trockengutbehälters.

Bei dem Verfahren wird während des ersten Schritts der Trockengutbehälter von beheizter Prozessluft durchströmt, wobei, für einen verbesserten Wärmeübergang in den Feststoff, insbesondere die Mischeinrichtung betrieben wird. Alternativ oder zusätzlich wird während des ersten Schritts der Feststoff während der Befüllung und/oder anschließend mittels einer Befeuchtungseinrichtung befeuchtet, insbesondere dann, wenn der Feststoff keinen oder einen zu geringen (z. B. unterhalb eines Anfangsfeuchtegehalts von beispielsweise zwischen 1 Gew.% und 5 Gew.% liegenden) Restfeuchtegehalt ausweist.

Einer effizienten Trocknung mit einem effektiven Schadstoffabtransport ist es zuträglich, wenn in dem zweiten Schritt während der Trocknungsphase der Trockengutbehälter kontinuierlich von Prozessluft durchströmt wird. Für eine zweckmäßige Verfahrensführung ist vorzugsweise, alternativ oder zusätzlich, während der Unterdruckphase der Trockengutbehälter von dem Luftkreislauf strömungsmechanisch entkoppelt.

Eine gründliche Schadstoffentfernung ist erreichbar, wenn der zweite Schritt, z. B. unter Zwischenschaltung einer Nachbefeuchtung, bis zum Erreichen eines Ziel-Grenzwerts, insbesondere eines Restschadstoffgehalts, der z. B. mittels einer Sensoreinrichtung innerhalb der Prozessluft bestimmt wird, ggf. mehrfach wiederholt wird.

Nachfolgend wird die Erfindung anhand von Ausführungsbeispielen unter Bezugnahme auf die Zeichnungen näher erläutert. Es zeigen:
- Fig. 1: eine schematische Darstellung einer Vorrichtung bzw. ein Fließschema eines Verfahrens zum Behandeln von Kunststoffen, wobei Schadstoffe aus den Kunststoffen entfernbar sind und
- Fig. 2: eine schematische Darstellung einer Vorrichtung zum Behandeln von Kunststoffen, mit einer im Vergleich zu Fig. 1 detaillierter dargestellten Trockenlufterzeugungseinheit.

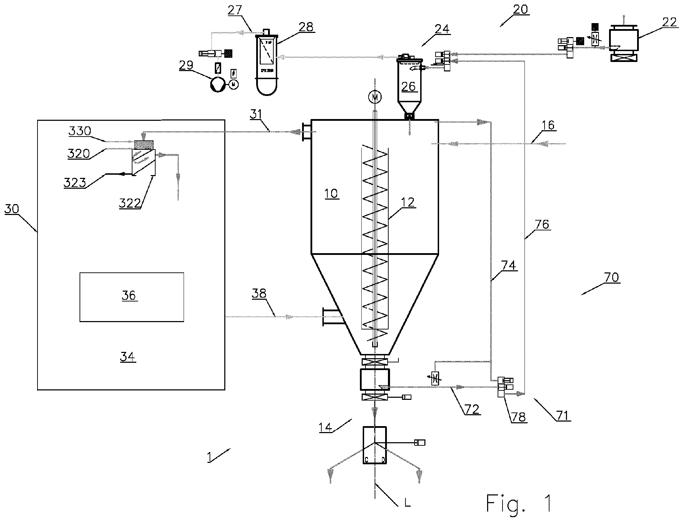

Fig. 1 zeigt eine Vorrichtung 1 zum Behandeln, insbesondere zum Trocknen, von Kunststoffen, wobei Schadstoffe, wie flüchtige Kohlenwasserstoffe ("volatile organic compounds", kurz VOC), entfernt werden. Die in der Vorrichtung 1 vorgenommene Behandlung bzw. Trocknung von Kunststoffen erfolgt insbesondere nach deren Compoundierung und/oder vor deren Weiterverarbeitung.

Zu diesem Zweck umfasst die Vorrichtung 1 zumindest einen entlang einer Längsachse L angeordneten Trockengutbehälter 10 zur Aufnahme des Feststoffes bzw. des Kunststoffes, insbesondere in Granulatform, während des Behandlungsvorgangs. Der Trockengutbehälter 10 ist vorzugsweise siloartig, etwa im Wesentlichen zylindrisch mit einem austrittsseitigen konusförmigen Trichter, ausgebildet. Für eine einfache Be- und Entladung ist der Trockengutbehälter 10 mit der Längsachse L in Vertikalrichtung ausgerichtet, wobei sich die Austrittsseite in Schwerkraftrichtung unten befindet. Der Trockengutbehälter 10 kann für unterschiedliche Aufnahmemengen ausgelegt sein, beispielsweise zur Aufnahme einer Granulatmenge von bis zu rund 1500 kg. Für einen Parallelbetrieb kann die Vorrichtung auch mehrere Trockengutbehälter 10 umfassen.

Weiterhin umfasst die Vorrichtung 1 eine Feststoffseite 20, über die der Trockengutbehälter 10 mit Feststoff befüllbar ist. Die Feststoffseite 20 weist eine Zugabeeinrichtung 24 zur Zugabe des Feststoffes in den Trockengutbehälter 10 auf. Die Zugabeeinrichtung 24 umfasst hier beispielhaft eine Aufgabeeinrichtung 22 zum Einbringen des unbehandelten Feststoffes (Rohmaterial). Weiterhin ist eine Abscheideeinrichtung 26 vorhanden, mittels der nicht weiter zu verwendendes Feinmaterial aus dem Feststoff mittels eines Luftstroms abgeschieden werden kann. Zu diesem Zweck steht die Abscheideeinrichtung 26 mit einer Steigleitung 76 einer Luftverteileranordnung 70 der Vorrichtung 1 in Strömungsverbindung. Zur Absaugung der mit Feinmaterial beladenen Luft ist auf der Feststoffseite weiterhin eine Absaugeinrichtung 27 mit einer Filtereinrichtung 28 zur Entfernung des Feinmaterials aus der Luft und mit einer Unterdruckerzeugungsvorrichtung 29 angeordnet. Die so gereinigte Luft ist gegebenenfalls in dem Behandlungsverfahren weiter verwendbar, z. B. über eine Frischluftzufuhr 101.

Mittels einer Entnahmeeinrichtung 14 ist der Feststoff dem Trockengutbehälter 10 entnehmbar. Vorteilhafterweise kann die Entnahmeeinrichtung 14 auch zur Probeentnahme ausgebildet sein.

Ferner weist die Vorrichtung 1 einen Luftkreislauf 30 auf, innerhalb dessen im Betrieb Prozessluft geführt wird. Der Trockengutbehälter 10 ist innerhalb des Luftkreislaufs 30 von Prozessluft durchströmbar angeordnet.

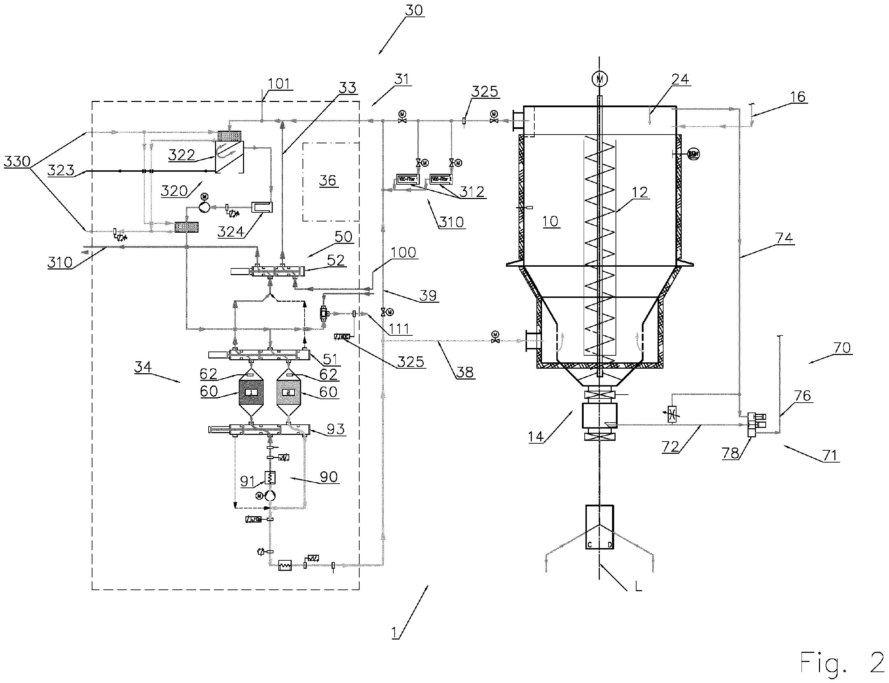

Stromab des Trockengutbehälters 10 weist der Luftkreislauf 30 eine Rückluftleitung 31 auf, mittels derer in Betrieb mit Feuchtigkeit und/oder Schadstoffen beladene Prozessluft aus dem Trockengutbehälter 10 geführt wird. Innerhalb der Rückluftleitung 31 ist zumindest eine Reinigungsstufe 320 zur Entfernung von Schadstoffen, insbesondere von VOC, aus der Prozessluft angeordnet. In dem in Fig. 1 gezeigten Ausführungsbeispiel umfasst die Reinigungsstufe 320 einen Kondensatabscheider 322. Innerhalb des Kondensatabscheiders 322 wird im Betrieb die die Rückluft bildende Prozessluft mittels Kühlwasser aus einer Kühlwasserversorgung 330 gekühlt, beispielsweise auf 40 °C. Dabei kondensieren Schadstoffe bzw. VOC aus und werden so (weitgehend) aus der Prozessluft entfernt. Die Abfuhr der Schadstoffe erfolgt über einen Austritt 323 des Kondensatabscheiders 322. Stromab des Kondensatabscheiders 322 kann in der Rückluftleitung 31 zusätzlich eine Filtereinrichtung 324, zur Abscheidung weiterer Schadstoffe zum Erhalt einer höheren Luftreinheit, angeordnet sein (vgl. Fig. 2).

Anschließend an die Reinigungsstufe 320 befindet sich in dem Luftkreislauf 30 eine Trockenlufterzeugungseinheit 34. Die Trockenlufterzeugungseinheit 34 umfasst insbesondere ein Trocknungsmittel, z. B. zumindest einen Festbettadsorber. Innerhalb der Trockenlufterzeugungseinheit 34 wird im Betrieb die Prozessluft getrocknet und, je nach Verfahrensschritt, gegebenenfalls erwärmt. Die getrocknete und/oder erwärmte Prozessluft ist mittels einer zwischen der Trockenlufterzeugungseinheit 34 und dem Trockengutbehälter 10 angeordneten Trockenluftleitung 38 wieder dem Trockengutbehälter 10 zuführbar. In der Trockenluftleitung 38 sind zweckmäßigerweise zu Überwachungs- und/oder Steuerungszwecken ein oder mehrere Sensorelemente, beispielsweise ein Temperatursensor, angeordnet (hier nicht gezeigt).

Für eine effektive und schnelle Schadstoffentfernung aus dem Kunststoff ist in dem Trockengutbehälter 10 eine Mischeinrichtung 12 angeordnet. Die Mischeinrichtung 12 kann beispielsweise durch eine Mischschnecke gebildet sein, die für eine gleichmäßige Mischwirkung z. B. symmetrisch innerhalb des Trockengutbehälters 10, insbesondere entlang der eine Symmetrieachse bildenden Längsachse L des Trockengutbehälters 10, angeordnet sein kann. Wenn die Mischeinrichtung 12 mit einer vertikalen Richtungskomponente ausgerichtet ist, kann der Feststoff in Granulatsform vorteilhaft unter Einwirkung der Schwerkraft während des Behandlungs- bzw. Trocknungsverfahrens vermischt werden. Durch die Mischeinrichtung 12 ist eine gute Luft- und/oder Flüssigkeitsverteilung innerhalb des Feststoffes erreichbar, wodurch sich eine gleichmäßige Atmosphäre zur Verflüchtigung der Schadstoffe aus dem Kunststoff ergibt.

Dem Trockengutbehälter 10 ist weiterhin eine Befeuchtungseinrichtung mit einer Fluidzugabe 16 zugeordnet, mittels derer der innerhalb des Trockengutbehälters 10 befindliche Feststoff, insbesondere mit Wasser, befeuchtet werden kann. Durch das Vorhandensein von Feuchtigkeit kann der Transport der Schadstoffe aus den Kunststoffkapillaren verbessert werden. Die Feuchtigkeit dient als eine Art Trägerfluid für einen verbesserten Abtransport der Schadstoffe aus dem Trockengutbehälter 10 während des Behandlungsverfahrens.

Weiterhin hat sich gezeigt, dass der Schadstoffaustrag aus dem Kunststoff durch Erzeugung eines Unterdrucks innerhalb des Trockengutbehälters 10 verbessert bzw. beschleunigt werden kann. Zu diesem Zweck weist die Luftverteileranordnung 70 eine Unterdruckerzeugungsanordnung 71 auf, wobei z. B. mittels einer Prozessluftleitung 74 und/oder einer Entnahmeleitung 72 und/oder entsprechender Ventilschaltung eines Ventils 78 Luft aus dem Trockengutbehälter 10 entnehmbar und ein Unterdruck gegenüber der Umgebung erzeugbar ist. Der Trockengutbehälter 10 und/oder der Luftkreislauf 30 sind gasdicht ausgebildet, um den erforderlichen Unterdruck von z. B. zwischen 100 mbar bis 400 bar mbar unter Umgebungsdruck während des entsprechenden Verfahrensschrittes zu halten.

Das Ventil 78 kann weiterhin derart geschaltet werden, dass die Prozessluftleitung 74 zusätzlich zur Materialförderung über die Entnahmeleitung 72 und/oder zur Leersaugung der Steigleitung 76 nach Förderende dienen kann.

Zur Steuerung und/oder Regelung des Verfahrens zur Behandlung bzw. Trocknung der Kunststoffe umfasst die Vorrichtung 1 eine Steuereinrichtung 36.

In dem in Fig. 2 gezeigten Ausführungsbeispiel sind weitere Details der Vorrichtung 1 dargestellt, insbesondere eine beispielhafte Ausführung der Trockenlufterzeugungseinheit 34. Weiterhin ist eine Bypassleitung 39 vorhanden, mit der der Trockengutbehälter 10 umgangen werden kann.

In der Rückluftleitung 31 ist eine weitere Reinigungsstufe 310 optional durchströmbar angeordnet, z. B. stromauf der Einmündung der Bypassleitung 39 aus der Trockenluftleitung 31 in die Rückluftleitung 31 und/oder unter Einbeziehung zumindest eines Abschnitts der Bypassleitung 39. Die Reinigungsstufe 310 umfasst zumindest eine, hier beispielhaft zwei, parallel durchströmbare Filtereinrichtung/en 312 zur Abreinigung von Schadstoffen, insbesondere VOC, aus der Prozessluft. Die Filtereinrichtung 312 kann beispielsweise als Aktivkohlefilter und/oder Flüssigkeitsfilter ausgebildet sein. Weitere Reinigungsstufen umfassend Filtereinrichtungen können vorhanden sein, beispielsweise vor einem Austritt von Prozessluft an die Umgebung.

Die Trockenlufterzeugungseinheit 34 ist prinzipgemäß ausgebildet und ist betreibbar wie in der DE 10 2014 772 A1 angegeben, wodurch vorteilhaft auf effiziente Weise kontrollierte Trockenlufteigenschaften erreichbar sind. Dabei weist die Trockenlufterzeugungseinheit 34 mindestens zwei Festbettadsorber auf, die sich hier beispielhaft in zwei Kammern 60 befinden. Zu Überwachungs- und/oder Steuerungszwecken ist jeder Kammer 60 bzw. jedem Festbettadsorber ein Temperatursensor 62 zugeordnet. Die Festbettadsorber bzw. die Kammern 60 werden im Betrieb während einer Regenerationsphase gleichzeitig von Prozessluft durchströmt. Sie sind im Wechsel zueinander zum einen von aus dem Trockengutbehälter 10 zugeführter, feuchtigkeitsbeladener Rückluft und zum anderen von trockener Regenerationsluft beaufschlagt. Die Regenerationsphase umfasst eine anfängliche Warmluftregenerationsphase und eine anschließende Kühlphase. Die Luftführung mit der wechselseitigen Beaufschlagung wird insbesondere mittels einer Rückluft-Ventileinheit 51 einer Ventilvorrichtung 50 und, hier beispielhaft, mittels einer Regenerations-Ventilvorrichtung 93 geregelt. Die Regeneration-Ventilvorrichtung 93 führt wechselweise die Prozessluft stromauf derjenigen Kammer 60 durch einen Regenerationszweig 90 mit einer Regenerationsheizvorrichtung 91, welcher gerade mit trockener Regenerationsluft beaufschlagt wird. Alternativ zu der Regenerations-Ventilvorrichtung 93 könnten auch zwei Regenerationszweige 90 umfassend jeweils eine Regenerationsheizvorrichtung 91 stromab der jeweiligen Kammern 60 vorhanden sein, wobei dann die Regenerationsheizvorrichtungen 91 jeweils wechselweise betrieben würden (hier nicht gezeigt).

Eine äußerst effektive und energieeffiziente Vorrichtung 1 zur Behandlung von Kunststoffen bzw. zur Schadstoffentfernung wird erhalten durch eine Zusatz-Ventileinheit 52 der Ventilvorrichtung 50, mittels welcher von einer Frischluftzufuhr, durch die dem Luftkreislauf 30 von außen Luft zuführbar ist, umschaltbar ist auf eine Umluftführung in geschlossenem Luftkreislauf 30, bei der die aus der betreffenden Kammer 60 austretende Kühlluft innerhalb des Luftkreislaufs 30 wieder zuführbar ist. Die Umschaltung erfolgt insbesondere bei Übergang von der Warmluftregenerationsphase auf die Kühlphase. Zur Wiederzuführung dient eine Zusatz-Strömungsleitung 33, mittels derer die Kühlluft zwischen dem Trockengutbehälter 10 und den Festbettadsorbern wieder zugeführt wird.

Bei der in Fig. 2 gezeigten Ausführungsvariante wird die figurgemäß linke der beiden Kammern 60 von Regenerationsluft beaufschlagt. Dabei befindet sich der Prozess in der Warmluftregenerationsphase, wobei sich die Zusatz-Ventileinheit 52 in Frischluft-Stellung befindet und der Luftkreislauf 30 geöffnet ist. Dabei wird die heiße, mit Feuchtigkeit beladene Regenerationsluft über die Ventileinheiten 51 und 52 über einen bzw. mehrere, hier beispielhaft zwei alternativ oder zeitgleich verwendbare, Abluftauslass/Abluftauslässe 110, 111 nach außen abgeführt. Über eine bzw. mehrere, hier beispielhaft zwei alternativ oder zeitgleich verwendbare, Frischluftzufuhr/en 100, 101 gelangt Frischluft zur Aufrechterhaltung des strömungsmechanischen Gleichgewichts über die Zusatz-Ventileinheit 52 und die Zusatz-Strömungsleitung 33 innerhalb des Luftkreislaufs 30 stromauf der Reinigungsstufe 320 in den Luftkreislauf 30. Durch die Zufuhr stromauf der Reinigungsstufe 320 wird die von außen zugeführte Frischluft bzw. ggf. Luft von der Feststoffseite 20 innerhalb des Kondensatabscheiders 322 abgekühlt.

Das Verfahren zum Behandeln bzw. Trocknen von Kunststoffen zur bzw. unter Schadstoffentfernung umfasst insbesondere mehrere Schritte: Zunächst wird der Trockengutbehälter 10 mit Feststoff, insbesondere mit Kunststoff, befüllt. Währenddessen kann der Trockengutbehälter 10 vorteilhafterweise bereits von beheizter Prozessluft durchströmt bzw. mit dieser befüllt werden. Die Mischeinrichtung 12 kann während dieses Verfahrensschrittes betrieben werden, um die Wärmeverteilung innerhalb des Feststoffes zu vergleichmäßigen. Wird Feststoff in trockenem Zustand eingefüllt, zur Schadstoffentfernung, und nicht zur Trocknung innerhalb des Herstellungsprozesses (im Anschluss an die Compoundierung), kann dieser währenddessen oder anschließend mittels der Befeuchtungseinrichtung z. B. zur Erreichung eines Anfangsfeuchtegehalts befeuchtet werden.

In einem anschließenden, zweiten Verfahrensschritt erfolgt zunächst in einer anfänglichen Trocknungsphase die Trocknung des Feststoffes mittels trockener und beheizter Prozessluft bei Umgebungsdruck, ohne Unterdruckatmosphäre. Bevorzugt wird der Trockengutbehälter dabei kontinuierlich von Prozessluft durchströmt. Nach der anfänglichen Trocknungsphase wird in einer Unterdruckphase eine Unterdruckatmosphäre erzeugt und z. B. aufrechterhalten, wobei der Druck innerhalb des Trockengutbehälters 10 um z. B. zwischen 50 mbar und 500 mbar, insbesondere um zwischen 100 mbar und 400 mbar gegenüber dem Umgebungsdruck abgesenkt wird. Die Luftabsaugung erfolgt bei der in Fig. 2 gezeigten Ausbildungsvariante über die Prozessluftleitung 74. Dabei findet vorzugsweise keine Durchströmung mit Prozessluft statt, sondern der Trockengutbehälter 10 ist von dem Luftkreislauf 30 strömungsmechanisch entgekoppelt, z. B. mittels vorhandener Schließmittel in der Rückluftleitung 31 und/oder der Trockenluftleitung 38. Die Trockenlufterzeugungseinheit 34 befindet sich während der Unterdruckphase vorzugsweise im Stand-by-Betrieb bei geöffneter Bypassleitung 39 mit weiterhin im Kreislauf geführter Prozessluft. So kann zügig und komponentenschonend zwischen der Trocknungsphase und der Unterdruckphase (und umgekehrt) umgeschaltet werden. Im Anschluss an die Unterdruckphase kann die Trocknungsphase fortgesetzt werden. Erforderlichenfalls kann die Unterdruckphase, auch mehrfach, wiederholt werden. Der Verfahrensschritt wird beispielsweise bis zum Erreichen eines bestimmten Restfeuchte-Grenzwertes durchgeführt.

Die Schadstoffe werden bei Entweichen der Feuchtigkeit aus dem Feststoff "ausgewaschen" und gehen in die dann mit Feuchtigkeit beladene Prozessluft über. Die Prozessluft wird abtransportiert, außerhalb des Trockengutbehälters 10 mittels der Reinigungsstufen 310, 320 von Schadstoffen (weitgehend) befreit und in der Trockenlufterzeugungseinheit 34 getrocknet. Die Reinigungsstufen 310, 320 sind vorzugsweise derart ausgelegt, dass die gereinigte Prozessluft, die aus der Vorrichtung 1 in die Umgebung eintritt, einen bestimmten Schadstoffgrenzwert unterschreitet.

Der zweite Verfahrensschritt kann erforderlichenfalls unter Zwischenschaltung einer Nachbefeuchtung (z. B. zur Wiederbefeuchtung auf den Anfangsfeuchtegehalt) wiederholt werden, beispielsweise zwei bis dreimal, bis ein erforderlicher bzw. vorgegebener Schadstoffgrenzwert erreicht ist.

Um den Schadstoff-Verflüchtigungsprozess schnell und effektiv zu gestalten, ist ein möglichst hohes Dampfdruckgefälle zwischen dem Feststoff-Granulat und der durchströmenden Prozessluft vorteilhaft. Die wichtigsten Verfahrensparameter hierbei sind die Temperatur der Prozessluft (beispielsweise bis zu 200 °C) sowie der Feuchtigkeitsgehalt des Feststoffes (mit einem Anfangsfeuchtegehalt von beispielsweise zwischen 1 Gew.% und 5 Gew.% des Feststoffes) und/oder der Prozessluft (Taupunkt z. B. zwischen -40 °C und -80 °C). Des Weiteren erhöht zusätzlich ein bestimmter Luftmengenstrom einerseits das Dampfdruckgefälle und verbessert andererseits die Abfuhr und Separation der Schadstoffe. Durch die Unterdruckerzeugung wird die Schadstoffentfernung weiter verbessert und die Prozessdauer verkürzt.

Die optimalen Parameter bzw. Parameterbereiche bezüglich Temperatur der Prozessluft, Feuchtigkeitsgehalt der Feststoffes und/oder der Prozessluft und Luftmengenstrom sind abhängig von der Beschaffenheit des eingebrachten, zu behandelnden Rohmaterials. Vorzugsweise wird im Vorfeld des Behandlungsverfahrens ein Kalibrierverfahren zur Ermittlung dieser Parameter durchgeführt, wobei dieselben insbesondere jeweils separat voneinander variiert werden. Vorzugsweise werden dabei einzuhaltende Randbedingungen angegeben, beispielsweise zumindest einer der folgenden Werte: ein zu erreichender (Ziel-)Schadstoffgrenzwert, der z. B. mittels vorhandener Sensoreinrichtungen 325 ermittelbar ist, eine (maximale) Trocknungszeit und/oder eine maximale Prozesslufttemperatur (z. B. unter Berücksichtigung von Limitierung aufgrund des verwendeten Feststoffes). Die ermittelten Parameter werden vorzugsweise in der Steuereinrichtung 36 hinterlegt und können z. B. automatisiert, bei Vorgabe des entsprechenden Feststoffes bzw. Rohmaterials, durch die Steuereinrichtung 36 bei der Steuerung und/oder Regelung des Behandlungsverfahrens angewandt werden.

In dem dritten Verfahrensschritt erfolgt die Entleerung des Trockengutbehälters 10 mit einer erforderlichenfalls anschließenden Reinigung.

Die Vorrichtung 1 ermöglicht eine Entfernung von Schadstoffen ohne Einsatz von Additiven und/oder Schleppmitteln, in demselben Verfahrensschritt wie die Trocknung von Kunststoffen bei deren Herstellung. Die Schadstoffentfernung kann auch unabhängig von einer innerhalb des Herstellungsverfahrens erforderlichen Trocknung von Kunststoffen erfolgen. So wird eine effiziente, kostengünstige Herstellung von bzw. Trocknung von Kunststoffen ermöglicht.

## Patentansprüche

1. Vorrichtung (1) zum Behandeln von Kunststoffen, mit
- einem Trockengutbehälter (10) zur Aufnahme von zu behandelndem Feststoff, insbesondere Kunststoff,
- einem Luftkreislauf (30) zur Kreisführung von Prozessluft, wobei der Trockengutbehälter (10) in dem Luftkreislauf (30) von Prozessluft durchströmbar angeordnet ist,
- einer in dem Luftkreislauf (30) angeordneten Trockenlufterzeugungseinheit (34) zur Trocknung von aus dem Trockengutbehälter (10) strömender Prozessluft, und
- einer Steuereinrichtung (36) zur Steuerung und/oder Regelung des Trocknungsvorgangs,
wobei in dem Luftkreislauf (30) zumindest eine Reinigungsstufe (310, 320) zur Entfernung von Schadstoffen in Form von flüchtigen Kohlenwasserstoffen aus der Prozessluft angeordnet ist,
wobei innerhalb des Trockengutbehälters (10) eine Mischeinrichtung (12) angeordnet ist,
**dadurch gekennzeichnet,**
**dass** eine Unterdruckerzeugungsanordnung (71) zur Erzeugung eines Unterdrucks gegenüber der Umgebung mit dem Trockengutbehälter (10) in Wirkverbindung steht, dass der Trockengutbehälter (10) und/oder der Luftkreislauf (30) zur Aufrechterhaltung des Unterdrucks während des Trocknungsvorgangs ausgebildet sind, und
**dass** dem Trockengutbehälter (10) eine Befeuchtungseinrichtung mit einer Fluidzugabe (16) zur Zugabe eines Fluids, insbesondere Wasser, zu innerhalb des Trockengutbehälters (10) befindlichem Feststoff zugeordnet ist.

2. Vorrichtung (1) nach Anspruch 1,
**dadurch gekennzeichnet,**
**dass** die Reinigungsstufe (310, 320) stromauf der Trockenlufterzeugungseinheit (34) angeordnet ist und/oder
zumindest einen Kondensatabscheider (322) und/oder eine Filtereinrichtung (312, 324) umfasst.

3. Vorrichtung (1) nach einem der vorhergehenden Ansprüche,
**dadurch gekennzeichnet,**
**dass** innerhalb des Luftkreislaufs (30) zumindest eine Sensoreinrichtung (325) zur Messung des Schadstoffgehalts, insbesondere des Gehalts an flüchtigen Kohlenwasserstoffen, und/oder zur Temperaturmessung und/oder Feuchtigkeitsmessung in der im Luftkreislauf (30) geführten Luft angeordnet ist.

4. Vorrichtung (1) nach einem der vorhergehenden Ansprüche,
**dadurch gekennzeichnet,**
**dass** die Trockenlufterzeugungseinheit (34) zumindest zwei in Kammern (60) befindliche Festbettadsorber aufweist, wobei die Vorrichtung so ausgebildet ist, dass die Festbettadsorber im Betrieb während einer Regenerationsphase gleichzeitig von Prozessluft durchströmt sind und im Wechsel zueinander zum einen von trockener Regenerationsluft beaufschlagt sind, wobei die Regenerationsphase eine anfängliche Warmluftregenerationsphase und eine anschließende Kühlphase umfasst.

5. Vorrichtung (1) nach Anspruch 4,
**dadurch gekennzeichnet,**
**dass** in dem Luftkreislauf (30) eine Ventilvorrichtung (50) mit einer Zusatz-Ventileinheit (52) angeordnet ist, die so ausgebildet ist, dass mittels dieser in der Regenerationsphase beim Übergang von der Warmluftregenerationsphase auf die Kühlphase von einer Frischluftzufuhr (100), durch die dem Luftkreislauf (30) von außen Luft zuführbar ist, umschaltbar ist auf eine Umluftführung in geschlossenem Luftkreislauf (30), bei der die aus der betreffenden Kammer austretende Kühlluft innerhalb des Luftkreislaufs (30) wieder zuführbar ist.

6. Vorrichtung (1) nach Anspruch 4 oder 5,
**dadurch gekennzeichnet,**
**dass** der Luftkreislauf (30) eine Zusatz-Strömungsleitung (33) umfasst, die so ausgebildet ist, dass mittels dieser während der Umluftführung die aus der betreffenden Kammer (60) austretende Kühlluft innerhalb des Luftkreislaufs (30) zwischen dem Trockengutbehälter (10) und den Festbettadsorbern, insbesondere stromauf der Reinigungsstufe (310, 320), wieder zuführbar ist.

7. Vorrichtung (1) nach einem der vorhergehenden Ansprüche,
**dadurch gekennzeichnet,**
**dass** der Luftkreislauf (30) eine Bypassleitung (39) zum Umgehen des Trockengutbehälters (10) aufweist.

8. Verfahren zum Behandeln von Kunststoffen mittels einer Vorrichtung nach einem der vorhergehenden Ansprüche, bei dem zu behandelnder Feststoff, insbesondere Kunststoff, in einem Trockengutbehälter (10) von in einem Luftkreislauf (30) geführter Prozessluft zumindest zeitweise durchströmt wird, wobei die aus dem Trockengutbehälter (10) strömende Prozessluft in einer in dem Luftkreislauf (30) angeordneten Trockenlufterzeugungseinheit (34) getrocknet wird und
aus dem Feststoff Schadstoffe in Form von flüchtigen Kohlenwasserstoffen, mittels der Prozessluft abtransportiert werden und die Schadstoffe aus der Prozessluft in dem Luftkreislauf (30) in zumindest einer Reinigungsstufe (310, 320) entfernt werden,
umfassend
i. einen ersten Schritt mit Befüllen des Trockengutbehälters (10) mit Feststoff,
ii. einen zweiten Schritt mit Trocknen des Feststoffes in einer anfänglichen Trocknungsphase mittels Prozessluft bei Umgebungsdruck und anschließendem Erzeugen einer Unterdruckatmosphäre in einer Unterdruckphase, wobei der Druck innerhalb des Trockengutbehälters (10) gegenüber dem Umgebungsdruck abgesenkt wird, und
iii. einen dritten Schritt mit Entleerung des Trockengutbehälters (10), wobei während des ersten Schritts der Trockengutbehälter (10) von beheizter Prozessluft durchströmt wird und eine Mischeinrichtung (12) betrieben wird, und/oder
wobei während des ersten Schritts der Feststoff während der Befüllung und/oder anschließend mittels einer Befeuchtungseinrichtung befeuchtet wird.

9. Verfahren nach Anspruch 8,
**dadurch gekennzeichnet,**
**dass** in dem zweiten Schritt während der Trocknungsphase der Trockengutbehälter (10) kontinuierlich von Prozessluft durchströmt wird und/oder dass in dem zweiten Schritt während der Unterdruckphase der Trockengutbehälter (10) von dem Luftkreislauf (30) strömungsmechanisch entkoppelt ist.

10. Verfahren nach einem der Ansprüche 8 oder 9,
**dadurch gekennzeichnet,**
**dass** der zweite Schritt, z. B. unter Zwischenschaltung einer Nachbefeuchtung, bis zum Erreichen eines Ziel-Grenzwerts wiederholt wird.

## Claims

1. A device (1) for treating plastics materials, comprising
- a dry material container (10) for receiving solid material, in particular plastics material, to be treated,
- an air circuit (30) for circulating process air, the dry material container (10) being arranged in the air circuit (30) such that process air can flow therethrough,
- a dry air generation unit (34) which is arranged in the air circuit (30) and intended for drying process air flowing from the dry material container (10), and
- a control apparatus (36) for controlling and/or regulating the drying process, at least one cleaning stage (310, 320) for removing pollutants in the form of volatile hydrocarbons from the process air being arranged in the air circuit (30),
a mixing apparatus (12) being arranged within the dry material container (10), **characterized in that**
a vacuum generation arrangement (71) for generating a vacuum relative to the surroundings is operatively connected to the dry material container (10), **in that** the dry material container (10) and/or the air circuit (30) are designed to maintain the vacuum during the drying process, and
**in that** a moistening apparatus is associated with the dry material container (10), which moistening apparatus has a fluid supply (16) for supplying a fluid, in particular water, to solid material located within the dry material container (10).

2. The device (1) according to claim 1,
**characterized in that**
the cleaning stage (310, 320) is arranged upstream of the dry air generation unit (34) and/or
comprises at least one condensate separator (322) and/or a filter apparatus (312, 324).

3. The device (1) according to either of the preceding claims,
**characterized in that**
at least one sensor apparatus (325) for measuring the pollutant content, in particular the content of volatile hydrocarbons, and/or for measuring the temperature and/or measuring the moisture in the air guided in the air circuit (30) is arranged within the air circuit (30).

4. The device (1) according to any of the preceding claims,
**characterized in that**
the dry air generation unit (34) has at least two fixed bed adsorbers located in chambers (60), the device being designed such that, in operation during a regeneration phase, process air flows through the fixed bed adsorbers simultaneously and dry regeneration air is applied to the fixed bed adsorbers alternately, the regeneration phase comprising an initial hot air regeneration phase and a subsequent cooling phase.

5. The device (1) according to claim 4,
**characterized in that**
a valve device (50) having an additional valve unit (52) is arranged in the air circuit (30), which is designed such that, by means thereof, in the regeneration phase, during the transition from the hot air regeneration phase to the cooling phase, it is possible to switch from a fresh air supply (100), through which air can be supplied to the air circuit (30) from the outside, to air recirculation in the closed air circuit (30), in which the cooling air exiting from the relevant chamber can be supplied back into the air circuit (30).

6. The device (1) according to claim 4 or claim 5,
**characterized in that**
the air circuit (30) comprises an additional flow line (33) which is designed such that, by means thereof, during the air recirculation, the cooling air exiting from the relevant chamber (60) can be supplied back into the air circuit (30) between the dry material container (10) and the fixed bed adsorbers, in particular upstream of the cleaning stage (310, 320).

7. The device (1) according to any of the preceding claims,
**characterized in that**
the air circuit (30) has a bypass line (39) for bypassing the dry material container (10).

8. A method for treating plastics materials by means of a device according to any of the preceding claims, in which method process air guided in an air circuit (30) flows at least periodically through solid material, in particular plastics material, to be treated in a dry material container (10), wherein the process air flowing from the dry material container (10) is dried in a dry air generation unit (34) arranged in the air circuit (30) and
pollutants in the form of volatile hydrocarbons are transported out of the solid material by means of the process air and the pollutants from the process air in the air circuit (30) are removed in at least one cleaning stage (310, 320),
the method comprising
i. a first step comprising filling the dry material container (10) with solid material,
ii. a second step comprising drying the solid material in an initial drying phase by means of process air at ambient pressure and subsequently generating a vacuum atmosphere in a vacuum phase, the pressure within the dry material container (10) being lower than the ambient pressure, and
iii. a third step comprising emptying the dry material container (10), wherein, during the first step, heated process air flows through the dry material container (10) and a mixing apparatus (12) is operated, and/or wherein, during the first step, the solid material is moistened during the filling and/or subsequently by means of a moistening apparatus.

9. The method according to claim 8,
**characterized in that**
in the second step during the drying phase, process air flows continuously through the dry material container (10), and/or
in the second step during the vacuum phase, the dry material container (10) is fluidically decoupled from the air circuit (30).

10. The method according to claim 8 or claim 9,
**characterized in that**
the second step, e.g., with the interposition of a remoistening process, is repeated until a target limit value is reached.

## Revendications

1. Dispositif (1) pour le traitement de matières plastiques, comportant
- un récipient pour produit sec (10) pour la réception d'une matière solide à traiter, en particulier d'une matière plastique,
- un circuit d'air (30) pour le guidage circulaire d'air de processus, dans lequel le récipient pour produit sec (10) est disposé dans le circuit d'air (30) de manière à pouvoir être traversé par de l'air de processus,
- une unité de production d'air sec (34) disposée dans le circuit d'air (30) pour le séchage d'air de processus s'écoulant hors du récipient pour produit sec (10), et
- un appareil de commande (36) pour la commande et/ou la régulation du processus de séchage,
dans lequel au moins un étage de nettoyage (310, 320) est disposé dans le circuit d'air (30) pour l'élimination de polluants sous forme d'hydrocarbures volatils de l'air de processus,
dans lequel un appareil de mélange (12) est disposé à l'intérieur du récipient pour produit sec (10),
**caractérisé en ce que**
un agencement de génération de dépression (71) pour la génération d'une dépression par rapport à l'environnement est en liaison active avec le récipient pour produit sec (10), que le récipient pour produit sec (10) et/ou le circuit d'air (30) sont conçus pour le maintien de la dépression pendant le processus de séchage, et
qu'un appareil d'humidification comportant un moyen d'ajout de fluide (16) pour l'ajout d'un fluide, en particulier d'eau, à la matière solide se trouvant à l'intérieur du récipient pour produit sec (10) est associé au récipient pour produit sec (10).

2. Dispositif (1) selon la revendication 1,
**caractérisé en ce que**
l'étage de nettoyage (310, 320) est disposé en amont de l'unité de génération d'air sec (34) et/ou
comprend au moins un séparateur de condensat (322) et/ou un appareil de filtrage (312, 324).

3. Dispositif (1) selon l'une des revendications précédentes,
**caractérisé en ce que**
à l'intérieur du circuit d'air (30) est disposé au moins un appareil formant capteur (325) pour la mesure de la teneur en polluants, en particulier de la teneur en hydrocarbures volatils, et/ou pour la mesure de la température et/ou la mesure de l'humidité dans l'air guidé dans le circuit d'air (30).

4. Dispositif (1) selon l'une des revendications précédentes,
**caractérisé en ce que**
l'unité de génération d'air sec (34) présente au moins deux adsorbeurs à lit fixe se trouvant dans des chambres (60), dans lequel le dispositif est conçu de sorte que, lors du fonctionnement, les adsorbeurs à lit fixe sont traversés simultanément par de l'air de processus pendant une phase de régénération et sont alimentés en alternance par de l'air de régénération sec, dans lequel la phase de régénération comprend une phase de régénération d'air chaud initiale et une phase de refroidissement ultérieure.

5. Dispositif (1) selon la revendication 4,
**caractérisé en ce que**
un dispositif formant soupape (50) comportant une unité formant soupape supplémentaire (52) est disposé dans le circuit d'air (30), lequel dispositif est conçu de sorte qu'au moyen de celui-ci, dans la phase de régénération, lors de la transition de la phase de régénération d'air chaud à la phase de refroidissement, il peut y avoir une commutation d'une amenée d'air frais (100), à travers laquelle de l'air peut être amené depuis l'extérieur vers le circuit d'air (30), à un guidage de circulation d'air dans le circuit d'air (30) fermé, dans lequel guidage l'air de refroidissement sortant de la chambre concernée peut être amené de nouveau à l'intérieur du circuit d'air (30).

6. Dispositif (1) selon la revendication 4 ou 5,
**caractérisé en ce que**
le circuit d'air (30) comprend une conduite d'écoulement supplémentaire (33) qui est conçue de sorte qu'au moyen de celle-ci, pendant le guidage de circulation d'air, l'air de refroidissement sortant de la chambre (60) concernée est amené de nouveau à l'intérieur du circuit d'air (30) entre le récipient pour produit sec (10) et les adsorbeurs à lit fixe, en particulier en amont de l'étage de nettoyage (310, 320).

7. Dispositif (1) selon l'une des revendications précédentes,
**caractérisé en ce que**
le circuit d'air (30) présente une conduite de dérivation (39) permettant de contourner le récipient pour produit sec (10).

8. Procédé permettant le traitement de matières plastiques au moyen d'un dispositif selon l'une des revendications précédentes, dans lequel une matière solide à traiter, en particulier une matière plastique, est traversée au moins temporairement par de l'air de processus guidé dans un circuit d'air (30) dans un récipient pour produit sec (10), dans lequel l'air de processus s'écoulant hors du récipient pour produit sec (10) est séché dans une unité de génération d'air sec (34) disposée dans le circuit d'air (30) et
des polluants sous forme d'hydrocarbures volatils sont évacués de la matière solide au moyen de l'air de processus et les polluants sont éliminés de l'air de processus dans le circuit d'air (30) dans au moins une étape de nettoyage (310, 320),
comprenant
i. une première étape comportant le remplissage du récipient pour produit sec (10) avec la matière solide,
ii. une deuxième étape comportant le séchage de la matière solide dans une phase de séchage initiale à l'aide d'air de processus à pression ambiante, puis la génération d'une atmosphère de dépression dans une phase de dépression, dans lequel la pression à l'intérieur du récipient pour produit sec (10) est abaissée par rapport à la pression ambiante, et
iii. une troisième étape comportant le vidage du récipient pour produit sec (10),
dans lequel, pendant la première étape, le récipient pour produit sec (10) est traversé par de l'air de processus chauffé et un appareil de mélange (12) est mis en fonctionnement, et/ou
dans lequel, pendant la première étape, la matière solide est humidifiée pendant le remplissage et/ou après au moyen d'un appareil d'humidification.

9. Procédé selon la revendication 8,
**caractérisé en ce que**
dans la deuxième étape, pendant la phase de séchage, le récipient pour produit sec (10) est traversé en continu par de l'air de processus et/ou que, dans la deuxième étape, pendant la phase de dépression, le récipient pour produit sec (10) est désaccouplé du circuit d'air (30) selon la mécanique de l'écoulement.

10. Procédé selon l'une des revendications 8 ou 9,
**caractérisé en ce que**
la deuxième étape est répétée, par exemple en intercalant une humidification ultérieure, jusqu'à ce qu'une valeur limite cible soit atteinte.
